# DEMANDE DE BREVET EUROPEEN

(11) **EP 1 808 332 A2**
(43) Date de publication de la demande: **18.07.2007**
(21) Numéro de dépôt: 07100238.0
(22) Date de dépôt: 08.01.2007
(51) Int. Cl.: B60Q 1/04

(54) **Dispositif de montage d'un bloc optique entre des éléments de structure d'un véhicule automobile et bloc optique comportant un tel dispositif de montage**

(30) Priorité: 11.01.2006 FR 0600241
(71) Demandeur: Peugeot Citroen Automobiles Société Anonyme, 78140 Velizy Villacoublay (FR)
(72) Inventeur: Gauthier, Jean Pierre, 94800, VILLEJUIF (FR)

(57) **Abrégé**

L'invention concerne un dispositif de montage (10) d'un bloc optique (1) entre des éléments de structure d'un véhicule automobile, ledit bloc optique (1) comprenant un boîtier (2) fermé par une glace (3) et les éléments de structure comprenant un pare-chocs, une aile (5) et une face avant technique (7). Le dispositif comprend un organe de liaison (11) du boîtier (2) monté au-dessous de ce boîtier (2) et pivotant autour d'un axe fixe sensiblement vertical et un organe de guidage placé derrière ledit boîtier (2) pour faciliter son basculement latéral vers l'extérieur du véhicule lors d'un choc frontal.

## Description

La présente invention concerne un dispositif de montage d'un bloc optique entre des éléments de structure d'un véhicule automobile, ainsi qu'un bloc optique pour véhicule comportant un tel dispositif de montage.

Les blocs optiques des véhicules automobiles comportent, de manière classique, un boîtier à l'intérieur duquel sont montées une ou plusieurs lampes et qui est fermé par une glace. Ce boîtier est relié à la carrosserie du véhicule par des moyens de liaison.

Généralement, ces moyens de liaison sont formés par plusieurs pattes solidaires du boîtier et fixées sur les éléments de carrosserie adjacents, comme par exemple le pare-chocs et l'aile avant.

Avec ce type de montage, le bloc optique dans le cas d'un choc frontal, recule et endommage les éléments du véhicule placés derrière, comme par exemple l'aile avant ou des accessoires du moteur.

Pour éviter ce genre d'inconvénients, on connaît des dispositifs de montage qui autorisent le recul du bloc optique en cas de choc frontal sans que ce bloc optique soit endommagé.

Mais, ce genre de dispositif a pour principal inconvénient d'accroître considérablement la course d'enfoncement ce qui augmente les risques de détérioration des éléments du véhicule placés derrière le bloc optique.

Pour palier au manque de volume disponible derrière le bloc optique, on connaît des dispositifs de montage qui mettent en oeuvre une cinématique de déplacement latéral du bloc optique en cas de choc frontal.

Mais, les dispositifs utilisés jusqu'à présent imposent aux stylistes des contraintes de position et de dimensionnement des éléments de structure adjacents au bloc optique.

On connaît également des dispositifs de fixation d'un bloc optique sur un élément de la structure du véhicule au moyen de pattes fusibles qui, en se rompant sous un choc de force déterminée, empêchent le recul de ce bloc optique. Mais, ces dispositifs ne peuvent absorber sans recul que les chocs de faible intensité, car au delà, ils produisent le même effet que les dispositifs classiques de fixation.

L'invention a pour but de proposer un dispositif de montage d'un bloc optique de conception simple qui permet d'éviter les inconvénients précédemment mentionnés et de limiter le coût des réparations dans le cas d'un choc frontal d'intensité modérée, tout en n'imposant aucune préconisation particulière aux stylistes sur la position des éléments de structure du véhicule adjacents au bloc optique.

L'invention a donc pour objet un dispositif de montage d'un bloc optique entre des éléments de structure d'un véhicule automobile, ledit bloc optique comprenant un boîtier fermé par une glace et les éléments de structure comprenant un pare-chocs, une aile et une face avant technique, caractérisé en ce qu'il comprend un organe de liaison du boîtier monté au-dessous de ce boîtier et pivotant autour d'un axe fixe sensiblement vertical et un organe de guidage placé derrière ledit boîtier pour faciliter son basculement latéral vers l'extérieur du véhicule lors d'un choc frontal.

Selon d'autres caractéristiques de l'invention :
- l'organe de liaison est formé par une pièce présentant un profil longitudinal en forme de S,
- l'axe vertical est solidaire de l'organe de liaison et disposé dans un logement ménagé à l'extrémité avant d'un brancard du véhicule,
- l'organe de guidage est formé par un galet porté par la face avant technique,
- le boîtier comporte, sur sa face arrière, une paroi inclinée vers le côté du véhicule et en contact avec le galet, et
- le dispositif comporte entre le bord du boîtier et bord de l'aile adjacente un enjoliveur de forme complémentaire auxdits bords.

L'invention a également pour objet un bloc optique de véhicule automobile, caractérisé en ce qu'il comporte un dispositif de montage tel que précédemment mentionné.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'une partie d'une face avant d'un véhicule automobile comportant un bloc optique équipé d'un dispositif de montage conforme à l'invention,
- la Fig. 2 est une vue schématique en perspective du bloc optique et du dispositif de montage de ce bloc optique,
- la Fig. 3 est une vue schématique en perspective éclatée du dispositif de montage du bloc optique,
- la Fig. 4 est une vue schématique en perspective de dessous du bloc optique et du dispositif de montage de ce bloc optique, et
- la Fig. 5 est une vue schématique de dessus du bloc optique.

Dans la description qui suit, les orientations utilisées sont les orientations habituelles d'un véhicule automobile et les termes "avant" et "arrière" s'entendent par rapport au sens de la marche normale du véhicule automobile.

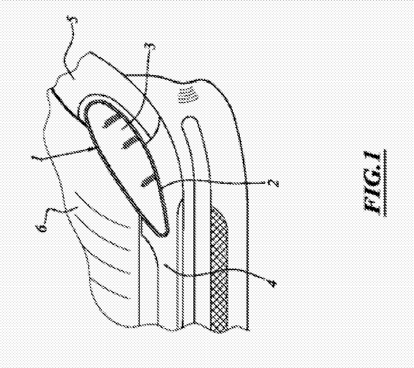

Sur la Fig. 1, on a représenté schématiquement une partie de la face avant d'un véhicule automobile montrant notamment un bloc optique désigné dans son ensemble par la référence 1.

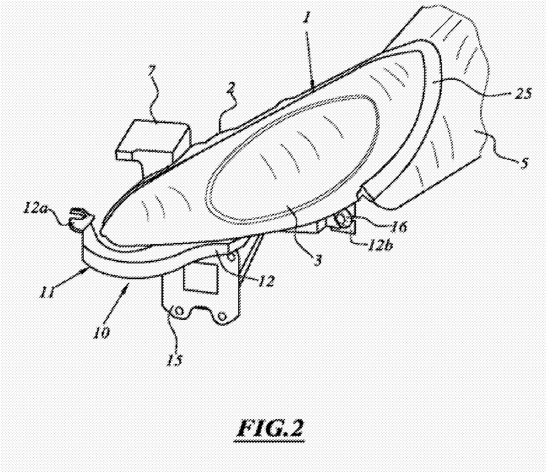

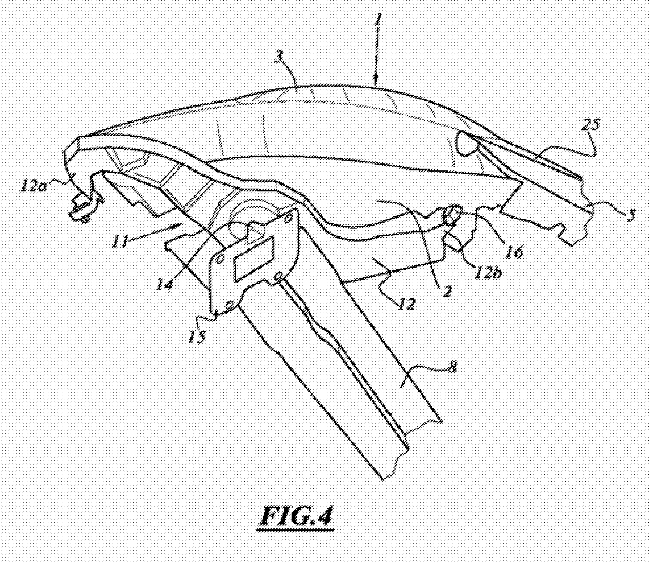

De manière classique, le bloc optique 1 se compose d'un boîtier 2 fermé par une glace 3 et d'un dispositif de montage désigné par la référence générale 10 (Figs. 2 à 4) sur des éléments de structure adjacents, comme on le verra ultérieurement.

Ainsi que représenté sur les Figs. 1 et 2, les éléments de structure adjacents au bloc optique 1 sont notamment un pare-chocs 4, une aile 5, un capot 6 et une face avant technique 7 destinée à supporter par exemple l'ensemble de refroidissement du groupe motopropulseur, non représenté, et à relier, à l'avant du véhicule, les différents éléments du châssis, comme par exemple les brancards avant et les prolonges de berceaux.

En se reportant maintenant aux Figs. 2 à 5, on va décrire le dispositif de montage 10 du bloc optique 1.

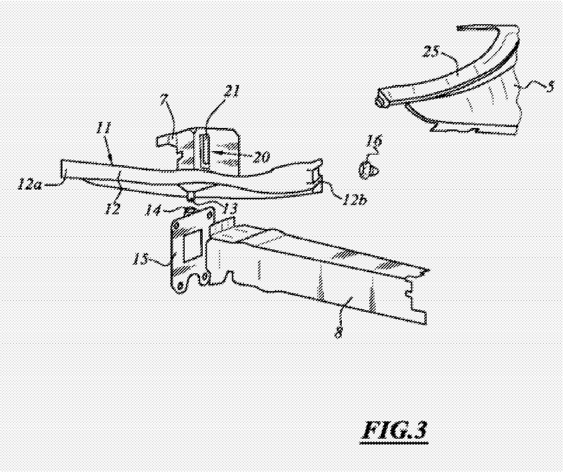

Ce dispositif de montage 10 comprend un organe de liaison 11 du boîtier 2 avec des éléments de structure et qui est disposé au-dessous de ce boîtier 2. Cet organe de liaison 11 est formé par une pièce 12 présentant un profil longitudinal en forme de S et monté pivotant autour d'un axe 13 (Fig. 3) fixe et sensiblement vertical.

Dans l'exemple de réalisation représenté sur les figures, l'axe vertical 13 est solidaire de la pièce 12 et est disposé dans un logement 14 ménagé dans une platine 15 fixée sur l'extrémité avant d'un brancard 8.

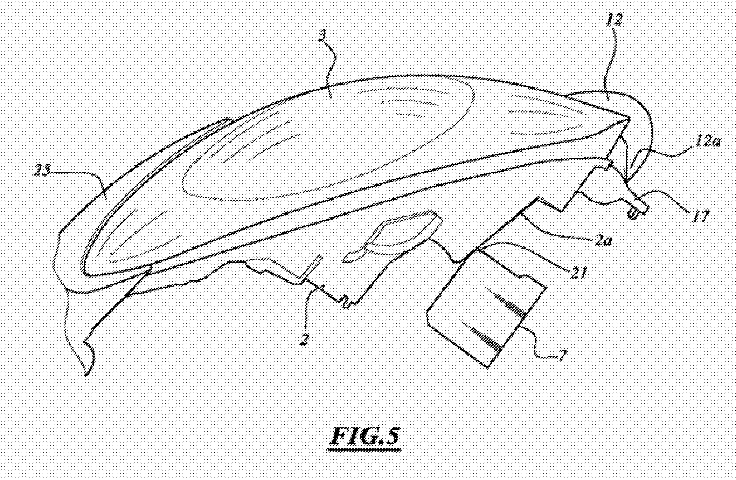

La pièce 12 formant l'organe de liaison 11 comporte une première extrémité 12a à proximité derrière la peau de pare-chocs 4 et une seconde extrémité 12b reliée à la partie arrière du boîtier 2 du bloc optique 1 par un organe de fixation 16. Ce bloc optique 2 est communément relié à sa partie avant, à un élément de structure par un organe de fixation 17 (Fig. 5). Le plus souvent cet élément de structure est formé par une poutre dite de réparabilité.

Ces organes de fixation 16 et 17 peuvent être conformés pour se rompre sous l'effet d'un choc frontal, de façon à satisfaire les critères de réparabilité.

Une troisième fixation en partie supérieure sur une éventuelle demi-façade, ou sur l'aile 5 adjacente au niveau de sa jonction avec le capot 6 pourra s'avérer nécessaire à l'isostatisme du boîtier 2 du bloc optique 1, suivant l'importance de son encombrement. Mais, celle-ci devra céder facilement, par exemple à un effort de cisaillement compris entre 10 et 30 DaN.

Comme montré plus particulièrement sur les Figs. 3 et 5, le dispositif de montage comporte un organe de guidage 20 placé derrière le boîtier 2 du bloc optique 1 pour, comme on le verra ultérieurement, faciliter son basculement latéral vers l'extérieur du véhicule lors d'un choc frontal.

Cet organe de guidage 20 est formé par un galet 21 à axe vertical porté par la face avant technique 7 au niveau du coin supérieur de cette face avant technique 7 située derrière le boîtier 2.

Pour cela, le boîtier 2 comporte, sur sa face arrière, une paroi inclinée 2a vers le côté du véhicule et en contact avec le galet 21 (Fig. 5).

Comme représenté sur les Figs. 2 et 3, un enjoliveur 25 est disposé entre le bord du boîtier 2 et le bord de l'aile 5 adjacente et cet enjoliveur 25. Cet enjoliveur 25 présente une forme complémentaire à ces bords. La présence de l'enjoliveur 25 permet de dissimuler le jeu ménagé entre le bloc optique 1 et l'aile 5 adjacente et cet enjoliveur 25 permet à l'aile 5 de ne pas recouvrir le boîtier 2 du bloc optique 1, tout en assurant un jeu minimum en aspect.

Selon plusieurs modes de réalisation, l'enjoliveur 25 peut être réalisé en un matériau transparent et collé sur le bloc optique 1 en ménageant un jeu minimum avec l'aile 5 adjacente ou peut être du même ton que la caisse du véhicule et encliqueté sur l'aile 5 adjacente, tout en ménageant un jeu minimum avec le bloc optique 1. L'enjoliveur 25 peut également être réalisé en un matériau chromé et indifféremment collé sur le bloc optique 1 ou encliqueté sur l'aile 5 adjacente.

Lors d'un choc frontal, le pare-chocs 4 vient impacter l'extrémité 12a de la pièce 12 formant l'organe de liaison 11, ce qui contribue à la rupture des organes de fixation 16 et 17 du boîtier 2 du bloc optique 1. Sous l'effet de ce choc, la pièce 12 pivote autour de l'axe 13 ce qui fait pivoter le boîtier 2 vers l'extérieur du véhicule. Dans le même temps, le boîtier 2 vient glisser sur le galet 21 de la face avant technique et l'enjoliveur 25 entre le bloc optique 1 et l'aile 5 adjacente est écarté de cette aile 5 pour l'évacuation du bloc optique sans soulever ladite aile 5.

Dans le cas d'un choc à faible vitesse par exemple inférieur à 15 km/h, le fait d'évacuer le bloc otique 1, évite que celui-ci endommage les éléments de structure situés derrière et notamment l'aile 5 adjacente.

Dans le cas d'un choc piéton, le dispositif de montage selon l'invention facilite l'intrusion de la jambe au-dessous des seuils acceptables de déccélaration et de flexion du genou.

Le dispositif de montage selon l'invention présente l'avantage de n'imposer aucune préconisation aux stylistes sur la position des éléments de carrosserie visibles autour du bloc optique et ne nécessite aucun dimensionnement spécifique vis à vis des éléments de structure environnant.

De plus, le dispositif de montage selon l'invention qui présente l'avantage d'être d'une conception simple et peu coûteuse, permet de limiter le coût des réparations en cas de choc frontal d'intensité modérée.

## Revendications

1. Dispositif de montage d'un bloc optique (1) entre des éléments de structure d'un véhicule automobile, ledit bloc optique (1) comprenant un boîtier (2) fermé par une glace (3) et les éléments de structure comprenant un pare-chocs (4), une aile (5) et une face avant technique (7), **caractérisé en ce qu'**il comprend un organe de liaison (11) du boîtier (2) monté au-dessous de ce boîtier (2) et pivotant autour d'un axe fixe (13) sensiblement vertical et un organe de guidage (20) placé derrière ledit boîtier (2) pour faciliter son basculement latéral vers l'extérieur du véhicule lors d'un choc frontal.

2. Dispositif selon la revendication 1, **caractérisé en ce que** l'organe de liaison (11) est formé par une pièce (12) présentant un profil longitudinal en forme de S.

3. Dispositif selon la revendication 1, **caractérisé en ce que** l'axe vertical (13) est solidaire d'un organe de liaison (11) et disposé dans un logement (14) ménagé à l'extrémité avant d'un brancard (8) du véhicule.

4. Dispositif selon la revendication 1, **caractérisé en ce que** l'organe de guidage (20) est formé par un galet (21) porté par la face avant technique (7).

5. Dispositif selon l'une quelconque des revendications précédentes, **caractérisé en ce que** le boîtier (2) comporte, sur sa face arrière, une paroi inclinée (2a) vers le côté du véhicule et en contact avec le galet (21).

6. Dispositif selon l'une quelconque des revendications précédentes, **caractérisé en ce qu'**il comporte entre le bord du boîtier (2) et le bord de l'aile (5) adjacente, un enjoliveur (25) de forme complémentaire auxdits bords.

7. Bloc optique (1) de véhicule automobile, **caractérisé en ce qu'**il comporte un dispositif de montage (10) selon l'une quelconque des revendications 1 à 6.
